# EUROPÄISCHE PATENTSCHRIFT

(11) **EP 2 018 015 B1**
(45) Veröffentlichungstag und Bekanntmachung des Hinweises auf die Patenterteilung: **15.06.2011**
(21) Anmeldenummer: 07113638.6
(22) Anmeldetag: 01.08.2007
(51) Int. Cl.: H04L 29/06

(54) **Verfahren und Vorrichtung für eine anonyme verschlüsselte mobile Daten- und Sprachkommunikation**
Method and device for anonymous encrypted mobile data and voice communication
Dispositif et procédé pour une communication de données et orale mobile verrouillée anonyme

(30) Priorität: 17.07.2007 DE 102007033667
(43) Veröffentlichungstag der Anmeldung: 21.01.2009
(73) Patentinhaber: GSMK Gesellschaft für sichere Mobile Kommunikation mbH, 10117 Berlin (DE)
(72) Erfinder: Rieger, Frank, 13187, Berlin (DE); Gonggrijp, Robbert, 1098 EJ, Amsterdam (NL)
(74) Vertreter: 2K Patentanwälte Blasberg Kewitz & Reichel

(56) Entgegenhaltungen:
- SYVERSON ET AL.: "Tor: The Second-Generation Onion Router" PROCEEDINGS OF THE 13TH USENIX SECURITY SYMPOSIUM, [Online] August 2004 (2004-08), - 13. August 2004 (2004-08-13) XP002462257 San Diego, CA Gefunden im Internet: URL:http://www.onion-router.net/Publicatio ns/tor-design.pdf>

## Beschreibung

Die Erfindung betrifft ein Verfahren, welches es den Teilnehmern ermöglicht, mobil anonymisierte verschlüsselte Nachrichten auszutauschen und Telefongespräche zu führen. Das Verfahren besteht aus einer Kombination starker Verschlüsselung zum Schutz der Inhalte des Gesprächs und einem Anonymisierungsmechanismus zum Schutz der Verbindungsdaten der Teilnehmer.

### Gebiet der Erfindung:

Bekannt sind mobile Endgeräte mit starker Verschlüsselung, die in der Lage sind, den Inhalt von Telefongesprächen und Kurznachrichten (mittels des Short Message Service SMS) zu verschlüsseln. Die für das vorgesehene Verfahren relevante Technik basiert auf einem sicheren Speicher ("secure storage") als Verwahrungsort für authentisierte Schlüssel. Der sichere Speicher muss vom Benutzer zur Benutzung mittels eines Passworts freigeschaltet werden. Das Verfahren unterstützt mehrere Arten der Nachrichtenübermittlung ("Transporttypen") wie z.B. SMS, CSD, GPRS usw., sowie mehrere Nachrichtentypen, die unter die beiden Haupttypen "Text" und "Media" fallen. Generell besteht eine transporttypenunabhängige Zustellmöglichkeit eines bestimmten Nachrichtentyps, auch wenn aus technischen Gründen nicht alle Nachrichtentypen mit allen Transporttypen harmonieren (als Beispiel sei die extrem unökonomische übermittlung von Sprachnachrichten über den Kurznachrichtendienst SMS genannt).

Eine mögliche Verschlüsselung erfolgt z.B. mit den Kryptoalgorithmen AES und Twofish (beide mit 256 bit Schlüssellänge) im CFB-Modus mit einem 256-bit Schieberegister; der Schlüsselaustausch geschieht mit einem 4096-bit Diffie-Hellman Mechanismus mit hash-basiertem Schutz vor "man in the middle"-Attacken. Das Verfahren ist aber auch für andere Algorithmen offen.

Die Druckschrift "Tor: The Second-Generation Onion Router "Proceedings of the 13th Usenix security symposium", offenbart die TOR - Router Technologie zum Übertragen von Daten, um deren Nachverfolgung nicht zu ermöglichen.

Nachteilig bei diesem Ansatz ist jedoch, dass der Verbindungsaufbau weiterhin überprüft werden kann. So kann festgestellt werden, wer mit wem und wann telefoniert hat.

Überblick über die Erfindung:
Aufgabe der vorliegenden Erfindung ist eine Anonymisierung der Kommunikation, so dass die Identität der beteiligten Partner nicht feststellbar ist.

Gelöst wird diese Aufgabe durch ein Verfahren und eine Vorrichtung mit den Merkmalen der unabhängigen Ansprüche.

Im Wesentlichen fügt das zu patentierende Verfahren der bestehenden Verschlüsselungskomoonente eine Anonymisierungskomponente hinzu, die es nicht nur wie bisher schon ermöglicht, die Gespräche selbst zu verschlüsseln, sondern auch zu verschleiern, wer mit wem (und ob überhaupt) kommuniziert hat. Dieser Schutz richtet sich in erster Linie gegen Verkehrsdatenanalyse ("traffic analysis") basierend auf Vorratsdatenspeicherung("call data record" CDR).

Hierzu bedient sich das erfindungsgemäße Verfahren eines anonymisierenden Netzwerks namens "Tor". Tor basiert auf dem Prinzip des "Onion Routing": Verbindungen auf dem Gerät des Nutzers werden über einen sog. "Onion Proxy" durchgeführt, der für jede Verbindung eine zufällig gewählte Route über die im Tor-Netzwerk vorhandenen Router wählt. Der letzte Server tritt hierbei als sog. "exit node" auf und versendet die Daten nach dem Verlassen der Tor-Wolke an den endgültigen Empfänger. Zu diesem Zeitpunkt lasst sich auch für einen ständigen Beobachter des "exit node" nicht mehr feststellen, wer der Absender der Nachricht war. Dieser Ansatz und dessen Komponenten sind aus dem "Tor" Projekt http://tor.eff.org bekannt.

Das erfindungsgemäße Verfahren nutzt den sog. "Tor Hidden Service", um den Gesprächspartnern über einen entwickelten Mechanismus die Verfügbarkeit eines Teilnehmers anzuzeigen. Ein Teilnehmer, der online ist, annonciert anhand eines weiter unten beschrieben Verfahrens einen "hidden service", der dem anderen Partner bekannt ist. Dadurch kommt eine Verbindung zustande, die aus zwei virtuellen "hidden service"-Leitungen besteht - eine für jede Richtung. Alle Datenpakete (beinhaltend Text, Sprache, etc.), die über diese virtuellen "hidden service"-Leitungen gesendet werden, werden unabhängig von einer weiteren ggf. auf dem Transportweg vorhandenen Kanalvarschlüsselung zunächst verschlüsselt. Hierdurch wird sichergestellt, dass die Vertraulichkeit der Nachricht gewahrt bleibt, selbst wenn es einem Angreifer gelungen sein sollte, die Anonymisierung zu umgehen.

Nach der verschlüsselung werden alle Nachrichten von Teilnehmer A an Teilnehmer B in einen "hidden circuit" bzw. einen "versteckten Schaltkreis" gesandt, der die Nachrichten durch die Tor-Wolke transportiert und dadurch die Kommunikationsbeziehung zwischen A und B verschleiert. Hierfür sollte jedem Teilnehmer die "hidden service ID" des Gegenübers bekannt sein. Durch eine Unterscheidung von "öffentlichen" und "privaten" service IDs werden Angriffe über eine Kreuzkorrelation oder via "spoofing" der dazwischengeschalteten "c/o-hosts" verhindert. Die service IDs für jeden Kommunikationspartner eines Teilnehmers werden mit einem lokalen Alias im secure storage des Geräts gespeichert.

Der nachfolgende Abschnitt gibt eine detailliertere technische Beschreibung des Verfahrens zur Nutzung des Tor-Netzes für die verschlüsselte anonymisierte Kommunikation mit mobilen Geräten.

Die Schaltkreise werden genutzt, sodass Nachrichten von A zu B in den Schaltkreis gesendet werden können, an den der Benutzer B und der Benutzer A als "hidden service" Server angeschlossen sind. B sendet Nachrichten in den Schaltkreis, den A aufgebaut hat, zu seinem "hidden service" Server. Dies ist notwendig, da ein Benutzer, der eingebrochen ist oder die Sicherheitsmechanismen wie die Torverschlüsselung oder Authentifikationsschemen umgangen hat, oder, was noch wahrscheinlicher ist, die Torschlüssel vom einem Benutzer gestohlen hat, um sich dann mit den IDs eines anderen Benutzers anzumelden, um die Nachrichten von ihm zu erlangen. Es werden somit zwei Kanäle verwendet für ein bidirektionale Kommunikation, wie es bei der Sprachkommunikation der Fall ist.

Somit kann verhindert werden, dass ein erfolgreiches Spoofing auf die "hidden service" ID zu einem Verlust von Nachrichten und zu einer Desynchronisierung der "key hash" Ketten führten würde. Da eine eigene Verschlüsselung innerhalb der Tor-Schaltkreise verwendet wird, wird ein Inhalt von Nachrichten nicht offenbart, ebenfalls falls die Torversohlüsselung und/oder die Anti-Spoofing Technologien versagen.

Sobald ein Benutzer sich mit dem Torsystem verbindet, werden die versteckten Services, über die er erreicht werden kann, in der Torwolke registriert. Falls ein Client in dieser Form konfiguriert ist, versucht der Client dann einen versteckten Service des Benutzers in seiner Buddy-Liste bzw. Kontaktliste zu kontaktieren und up-dated den Online-Status der Buddy-liste, falls diese erreicht werden können. Die versteckten Service-Schaltkreise können dann am Leben erhalten werden für eingehende und ausgehende Nachrichten und für Online-Status-Updates oder können abgeschaltet werden nach einer Nachrichtenübertragung (abhängig von der Benutzerkonfiguration siehe die Verbindungsprofile).

Um in der Lage zu sein, einen Benutzer zu kontaktieren, muss deren versteckte Service-ID im allgemeinen (e.g. 5xmm3d9vkn21kq90.onion) bekannt sein. Die maximale praktische Anzahl von versteckten Service-IDs, die offen gehalten werden können pro Gerät, ist zu bestimmen. In der Praxis sollte der Benutzer eine öffentliche "hidden Service"-ID besitzen (diese kann auf Business-Karten oder in Directories veröffentlicht werden), die genutzt wird, um einen internen Kontakt zu etablieren. Die Client-Software ordnet dann jedem Kommunikationspartner eine eindeutige "hidden Service-ID" zu (dieses verhindert eine Cross-Relation oder ein Spoofing am c/o-Host wie weiter unten beschrieben). Falls gewünscht, kann ein Benutzer ebenfalls eine eindeutige ID manuell erzeugen und kann diese manuell an die Kommunikationspartner ausgeben. Es ist hierbei zu vermeiden, dass die IDs doppelt ausgegeben werden. Dieser Ansatz ist möglich, weil die Service-IDS von Endgeräten selber erzeugt werden (bekannte Algorithmen) und aufgrund ihrer Länge eine Kollision vermieden wird. Diese Service ID wird den benachbarten Routern zur Verfügung gestellt, die nach einem besonderen Verfahren die Service-IDs für das Routing nutzen.

Die IDs des Kommunikationspartners werden vorzugsweise mit einem lokalen Alias versehen, der in dem sicheren Adressbuch abgespeichert ist.

Ein spezieller Typ von Konfiguration ist der c/o-Host. Man kann sich diesen vorstellen als eine Art von glaubwürdigen Anrufbeantwortern für Tor-Nachrichten. Alle Kommunikationen zwischen einem Benutzer und dem c/o-Host werden über einen speziellen zugewiesenen versteckten Service-Schaltkreis mit einer geheimen ID durchgeführt. Der Benutzer überträgt seine "hidden service" ID an den c/o-Host (er muss seine Tor-"hidden service"-Schlüssel auf den Server dafür hinterlegen). Der c/o-Host überwacht dann, ob diese IDs online sind durch periodischen Kontaktversuch. Falls diese offline gehen, registriert der c/o-Host die IDs in der Tor-Wolke, verbindet die korrespondierenden IDs der Kommunikationspartner und empfängt alle Nachrichten von ihnen mit der Antwort "stored by c/o-Host"-Nachrichten.

Wenn der Benutzer online geht, verbindet er sich zuerst mit seinem c/o-Host, empfängt die gespeicherten Nachrichten und veranlasst den c/o-Host, sich mit seiner ID vom Netzwerk zu deregistrieren. Er registriert dann die IDs mit seinem Gerät und sendet eine "received acknowledge"-Nachricht für alle Nachrichten, die er von dem c/o-Host erlangt hat. Mit diesem Setup wird die Funktionalität eines heutigen e-mail- und Instant Messaging-Systems erreicht, ohne einen attackierbaren zentralen Host und ohne die verletzbarkeit durch eine Verkehrsanalyse.

Der Ort des c/o-Hosts muss nicht für alle in dieser Konfiguration bekannt sein außer dem Betreiber der physikalischen Maschine (dies kann der Benutzer selber sein, der zumindest dem Server ein wenig vertrauen sollte). Der Desktop-Client kann ebenfalls eine c/o-Funktionalität enthalten, so dass es sehr einfach wird, einen persönlichen c/o-Host auf einem Desktop-System laufen zu lassen. Das einzige, was der Benutzer durchführen muss, ist, dass er die "hidden service" ID seines c/o-Hosts eingeben kann, die angezeigt wird durch Software auf seinem mobilen Gerät.

Da der c/o-Host ebenfalls mit dem Benutzer über den Tor-Schaltkreis bzw. die Wolke verbunden ist, und er nicht die Verschlüsselungsschlüssel oder Klartext-Nachrichten speichert, kann ein Übernehmen des c/o-Host lediglich einen Verlust der gespeicherten Nachrichten verursachen und es dem Angreifer ermöglichen, eine aktive Attacke gegen die Anonymität des Benutzers laufen zu lassen, in dem er ein Zeitablaufmuster beim Verkehr mit dem Benutzer hinzufügt. Der Inhalt der Nachrichten und die ursprünglichen Absender der gespeicherten Nachrichten sind weiterhin gegen den Attackierenden gesichert.

Tor-Schaltkreise sind momentan in der bevorzugten Ausführung TCP-Verbindungen. Das bedeutet, dass eine relativ hohe Zuverlässigkeit angenommen wird, falls der Schaltkreis aufgebaut wurde. Es ist jedoch angedacht, auch über Netzwerke, die weniger zuverlässig sind, Daten zu übersenden, dies kann z.B. eine UDP-Verbindung sein. Somit ist dies nicht auf TCP-Verbindungen beschränkt.

Weiterhin sollten die Nachrichten aufgefüllt werden, so dass sie unfragmentierte IP-Pakete innerhalb eines Tor-Schaltkreises auffüllen. Nachrichten, die länger als ein Paket sind, werden auf mehrere Pakete aufgeteilt, mit Verbindungsindikatoren, die einen korrekten Wiederzusammenbau erlauben. Jedes Paket wird als separate Nachricht behandelt, was bedeutet, dass ein Verständigungsumschlag aufweist, und entschlüsselt werden kann, auch wenn andere Pakete, die zu der gleichen Nachricht gehören, verlustig sein sollten.

Ein weiteres wichtiges Ziel des Tor-Transport-Layers ist die Verkehrsverschleierung. Vorzugsweise sollte der "hidden service"-Traffic wie eine gewöhnliche https://-Verbindung aussehen. Dies kann einerseits dadurch erlangt werden, indem Veränderungen am Protokoll so vorgenommen werden können, dass dieser zurück zum Haupt-Tor-Wolke zurückgeführt werden kann oder dass die Benutzer dies selber durchführen. Hierbei wird die Sprachkommunikation oder die SMS/MMS-Kommunikation über ein Protokoll gesendet, das aufgrund seiner Ports und seiner Adressierung einer https://-Verbindung entspricht. Da der Inhalt der Pakete verschlüsselt ist, kann kein Rückschluss auf eine Sprachkommunikation getroffen werden.

Im Wesentlichen sind die zwei Hauptgründe, um eine Verkehrsverschleierung einzusetzen, die Vermeidung von Problemen der Benutzern und die bessere Funktionalität in beschränkten Netzwerkumgebungen, wie diese häufig in GSMbasierten IP-Netzwerken gegeben sind. Es kann sogar somit dazu führen, dass ein echter äußerer Layer von http/TLS auf die Kommunikation zwischen dem Client und dem ersten Tor-Server addiert werden muss. Da die Zertifikate von dem Benutzer selber abgelegt werden können, können solche Probleme wie das Sniffen von SSL-Proxies oder Mainstream-Zertifikaten vermieden werden.

Der Tor-Client empfängt momentan eine große Host-Tabelle mit Bandbreite und Uptime-Attributen beim Verbinden mit dem Netzwerk und wählt zumindest den ersten Host in der Kette aus, basierend auf den Attributen. Da dieser Ansatz dazu benutzt werden kann, zu erkennen, dass ein Tor-Client präsent ist, genauso wie für die De-Anonymisierungsattacken und dem sehr hohen Bedarf an Bandbreite für ein GPRS-basiertes Gerät sollte der Client in einer anderen Form arbeiten. Daher werden vorzugsweise nur zufällige Untergruppen von Hosts in einer Tabelle ermittelt oder die Tabellen werden gecached oder es werden andere Wege zum regelmäßigen Updaten der Tabelle gewählt. Idealerweise werden eine Anzahl von vertrauenswürdigen ersten Eingangs-Hosts gebildet oder es werden andere Mittel gefunden, um Eingangspunkte bereitzustellen, so dass die Tor-Wolke nicht einfach durch einen Operator zu blockieren ist. So sind z.B. Ansätze, die auf Prioritäten arbeiten denkbar. So kann ein Update für Benutzer dann mit einer hohen Priorität erfolgen, wenn mit diesen häufig in der Vergangenheit kommuniziert wurde. Da die Tor-Ausgangknoten ein Ziel für mehr und mehr Hintertürangriffe werden können, was zu einem steigenden Missbrauch führt, muss eine große Anzahl von Ausgangs-Knoten vorhanden sein, die laufend eingefügt oder entfernt werden können.

Knoten, die die vorliegende Tor-Version nutzen, sollten zusätzliche Anti-Tracking-Verfahren nutzen, wie das zufällige Zeit-Jittern von Paketen, die durchgesendet werden. So kann ebenfalls über einen Protokoll-Indikator außerhalb des Verschlüsselungsumschlages nachgedacht werden, der erklärt ob Pakete von jeglichen Zeitinformationen befreit werden sollen; diese Pakete auf Kosten einer höheren Latenzzeit überträgt oder sie werden weniger stringent gereinigt und bekommen dadurch eine geringere Latenz.

### Kurze Figurenbeschreibung:

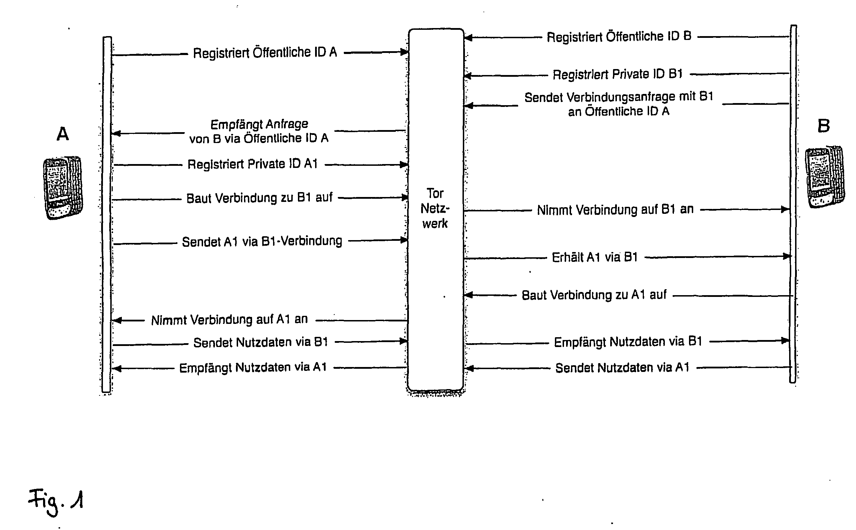

Die folgenden Figuren dienen dem besseren Verständnis der Erfindung. Sie sollen nicht der Beschränkung des Schutzumfanges dienen. Es zeigt
Fig. 1 den Ablauf der Kommunikation von zwei Endgeräten über das Tor Netzwerk.

### Detaillierte Beschreibung einer möglichen Ausführungsform:

Die Figur 1 zeigt den Ablauf der Anmeldung bei einer bevorzugten Ausführungsform. Sowohl Endgerät A als auch Endgerät B sind über eine öffentliche ID im Tor- Netzwerk erreichbar. Das Endgerät B möchte nun eine Verbindung mit dem Gerät A aufbauen. Hierzu wird eine private ID registriert (diese kann jederzeit asynchron erzeugt werden. Aufgrund des großen Adressraums kommt es mit sehr geringer Wahrscheinlichkeit zu Kollisionen), über die in der Zukunft die Kommunikation zu erfolgen hat. Im nächsten Schritt wird dann eine Verbindungsanfrage an die öffentliche ID von A gesendet, die das Tor-Netzwerk weiterleitet.
Nach dem Empfangen der Anfrage durch A registriert A eine Private ID A1 und Baut eine Verbindung zu B1 auf. B nimmt diese Verbindung an und sendet A via B1 die Verbindungsinformation. B erhält ID A1 via B1 und baut nun darüber eine Verbindung zu A1 auf. A nimmt die Verbindung auf A1 an. Somit kann eine Kommunikation über die geheimen IDs A1 und B1 erfolgen, wobei A über die Adresse B1 die Nutzdaten sendet und B über die Adresse A1.
Diese Figur dient zum besseren Verständnis der Erfindung. Sie hat nicht die Absicht, die Erfindung einzuschränken. Der Schutzumfang soll durch die breiteste Interpretation der beigefügten Ansprüche bestimmt werden.

## Patentansprüche

1. Verfahren zum Anonymisieren der Kommunikation von mobilen Endgeräten, die eine Sprachkommunikation durchführt, unter Verwendung eines anonymisierenden Netzwerkes, das eine Reihe von Routern umfasst, das mindestens einen Zugangsknoten aufweist, wobei jedes mobile Endgerät mit zumindest einem Zugangsknoten eine Verbindung aufbaut, umfassend die Schritte:
- Anmelden des mobilen Endgerätes am Netzwerk über einen Zugangsknoten;
- Bereitstellen einer Identität im Netzwerk;
- Kommunikation über das anonymisierende Netzwerk, wobei das Netzwerk für die Kommunikation unterschiedliche zufällige Routen über das Netzwerk wählt, so dass eine Ruckverfolgung verhindert wird und wobei die Kommunikation verschlüsselt wird, wobei die Sprachkommunikation über jeweils zwei virtuelle Leitungen erfolgt, eine für jede Richtung, die unabhängig voneinander verschlüsselt werden und die unterschiedlich geroutet werden.

2. Das Verfahren nach einem oder mehreren der vorhergehenden Ansprüche, wobei das mobile Endgerät über eine öffentliche Service ID im anonymisierenden Netzwerk erreichbar ist, und nach einer Kontaktaufnahme die Kommunikation über eine private Service ID weitergeführt wird.

3. Das Verfahren nach dem vorhergehenden Anspruch, wobei Service IDs für jeden Kommunikationspartner eines Teilnehmers mit einem lokalen Alias in einem secure storage des mobilen Endgerätes gespeichert werden.

4. Das Verfahren nach dem vorhergehenden Anspruch, wobei nach dem Anmelden eine Aktualisierung des Online-Status erfolgt.

5. Das Verfahren nach dem vorhergehenden Anspruch, wobei nur zufällige Untergruppen von Hosts in einer Tabelle ermittelt oder
die Tabellen gecached werden
oder es wird eine Anzahl von vertrauenswürdigen ersten Eingangs-Hosts gebildet, die die Tabellen cachen,
oder es erfolgt ein Update für Benutzer nach Priorität, so ist die Priorität hoch, wenn mit diesen häufig in der Vergangenheit kommuniziert wurde.

6. Das Verfahren nach einem oder mehreren der vorhergehenden Ansprüche, wobei ein c/o-Host eingesetzt wird, der für Sprachnachrichten und Textnachrichten die Funktion eines Anrufbeantworters übernimmt und wobei vorzugsweise eine "hidden service" ID auf dem c/o-Host hinterlegt sind, wobei der c/o-Host überprüft, ob diese IDs online sind, und falls diese IDs offline gehen, registriert der c/o-Host die IDs in der Tor-Wolke selber und verbindet die korrespondierenden IDs der Kommunikationspartner und empfängt alle Nachrichten von ihnen vorzugsweise mit der Antwort "stored by c/o-Host"-Nachrichten und wobei wenn das mobile Endgerät online geht, verbindet es sich zuerst mit seinem c/o-Host, empfängt die gespeicherten Nachrichten und veranlasst den c/o-Host, sich mit seiner ID vom Netzwerk zu deregistrieren, das mobile Endgerät registriert dann die IDs mit seinem Gerät und sendet dann vorzugsweise eine "received acknowledge"-Nachricht für alle Nachrichten, die er von dem c/o-Host erlangt hat.

7. Das Verfahren nach einem oder mehreren der vorhergehenden Ansprüche, wobei der Verkehr verschleiert wird, indem die Sprachkommunikation wie eine gewöhnliche https://- Verbindung aussieht.

8. Mobiles Endgerät zum Anonymisieren einer Sprachkommunikation, umfassend:
- Mittel, die eine Sprachkommunikation durchführen,
- Mittel zum Anmelden des mobilen Endgerätes an einem anonymisierenden Netzwerk über einem Zugangsknoten;
- Mittel zum Bereitstellen einen Identität im anonymisierenden Netzwerk;
- Kommunikationsmittel zur Sprachkommunikation über das anonymisierende Netzwerk, wobei das Netzwerk für die Kommunikation unterschiedliche zufällige Routen über das Netzwerk wählt, so dass ein Rückverfolgung verhindert wird und wobei die Kommunikation verschlüsselt wird,wobei Mittel vorhanden sind, die die Sprachkommunikation über jeweils zwei virtuelle Leitungen durchführen, eine für jede Richtung, die unabhängig voneinander verschlüsselt werden und die unterschiedlich geroutet werden.

9. Das mobile Endgerät nach einem oder mehreren der vorhergehenden Endgeräteansprüche, wobei Mittel vorhanden sind, so dass das mobile Endgerät über eine öffentliche Service ID im anonymisierenden Netzwerk erreichbar ist, und nach einer Kontaktaufnahme die Kommunikation über eine private Service ID weitergeführt wird.

10. Das mobile Endgerät nach dem vorhergehenden Endgeräteanspruch, wobei ein secure storage vorhanden ist, und die Service IDs für jeden Kommunikationspartner eines Teilnehmers mit einem lokalen Alias in einem secure storage gespeichert ist.

11. Das mobile Endgerät nach dem vorhergehenden Endgeräteanspruch, wobei nach dem Anmelden eine Aktualisierung des Online-Status des Teilnehmers im secure storage erfolgt.

12. Das mobile Endgerät nach dem vorhergehenden Endgeräteanspruch,
wobei nur zufällige Untergruppen von Hosts in einer Tabelle ermittelt oder eine Datenbank mit den Teilnehmer gecached wird;
oder es wird eine Anzahl von vertrauenswürdigen ersten Eingangs-Hosts gebildet, die die Tabellen cachen und von dem diese abgeholt werden,
oder es erfolgt ein Update für Benutzer nach Priorität, so ist die Priorität hoch, wenn mit diesen häufig in der Vergangenheit kommuniziert wurde.

13. Das mobile Endgerät nach dem vorhergehenden Anspruch, wobei das anonymisierende Netzwerk das Tor-Netzwerk ist.

## Claims

1. Method for anonymising communication from mobile terminals, which performs a voice communication using an anonymising network which comprises a series of routers, which has at least one access node, each mobile terminal, with at least one access node, setting up a connection, comprising the steps:
- making a call from the mobile terminal to the network via an access node;
- provision of an identity in the network;
- communication via the anonymising network, the network for the communication choosing different random routes across the network so that tracing back is prevented and the communication being encrypted, the voice communication being effected via respectively two virtual lines, one for each direction, which are encrypted independently of each other and are routed differently.

2. Method according to one or more of the preceding claims, the mobile terminal being able to be reached via a public service ID in the anonymising network and, after making contact, the communication being directed further via a private service ID.

3. Method according to the preceding claim, service IDs for each communication partner of a subscriber with a local alias being stored in a secure storage of the mobile terminal.

4. Method according to the preceding claim, updating of the online status being effected after making the call.

5. Method according to the preceding claim, only random sub-groups of hosts in a table being determined or
the tables being cached
or a number of reliable first input hosts which cache the tables being formed
or an update for users being effected according to priority,
thus the priority is high if there has been frequent communication with the latter in the past.

6. Method according to one or more of the preceding claims, a c/o host being used, which assumes the function of an answerphone for voice messages and text messages and preferably a "hidden service" ID being stored on the c/o host, the c/o host testing whether these IDs are online and if these IDs go offline, the c/o host registers the IDs in the Tor cloud itself and connects the corresponding IDs of the communication partners and receives all messages from them preferably with the reply "stored by c/o host" messages and, when the mobile terminal goes online, connecting it firstly to its c/o host, receiving the stored messages and causing the c/o host to deregister with its ID from the network, the mobile terminal then registering the IDs with its device and then preferably sending a "received acknowledge" message for all messages which it requested from the c/o host.

7. Method according to one or more of the preceding claims, the communication being disguised by the voice communication looking like a normal https://connection.

8. Mobile terminal for anonymising a voice communication, comprising:
- means which perform a voice communication,
- means of making a call to the mobile terminal on an anonymising network via an access node;
- means for providing an identity in the anonymising network;
- communication means for voice communication via the anonymising network, the network for the communication choosing different random routes across the network so that tracing back is prevented and the communication being encrypted, means being present which perform the voice communication via respectively two virtual lines, one for each direction, which are encrypted independently of each other and are routed differently.

9. Mobile terminal according to one or more the preceding terminal claims, means being present so that the mobile terminal can be reached via a public service ID in the anonymising network and, after making contact, the communication being directed further via a private service ID.

10. Mobile terminal according to the preceding terminal claim, a secure storage being present and the service IDs for each communication partner of a subscriber with a local alias being stored in a secure storage.

11. Mobile terminal according to the preceding terminal claim, updating of the online status of the subscriber being effected in the secure storage after making a call.

12. Mobile terminal according to the preceding terminal claim,
only random sub-groups of hosts in a table being determined or a databank with the subscribers being cached;
or a number of reliable first input hosts which cache the tables being formed and these being fetched from the latter,
or an update for users being effected according to priority,
thus the priority is high if there has been frequent communication with the latter in the past.

13. Mobile terminal according to the preceding claim, the anonymising network being the Tor network.

## Revendications

1. Procédé pour anonymiser la communication de terminaux mobiles, qui exécutent une communication vocale, en employant un réseau d'anonymisation, qui comporte une série de routeurs qui comprend au moins un noeud d'accès, chaque terminal mobile établissant une liaison avec au moins un noeud d'accès, comprenant les étapes consistant à :
- inscrire les terminaux mobiles dans le réseau par le biais d'un noeud d'accès ;
- préparer une identité dans le réseau ;
- communiquer par le réseau d'anonymisation,
**caractérisé en ce que** le réseau choisit pour la communication différents chemins aléatoires dans le réseau de sorte à empêcher un traçage rétroactif et **en ce que** la communication est chiffrée, la communication vocale ayant lieu à chaque fois par le biais de deux lignes virtuelles, une pour chaque direction, qui sont chiffrées indépendamment l'une de l'autre et sont acheminées de manière différente.

2. Procédé selon la revendication précédente, **caractérisé en ce que** le terminal mobile peut être atteint par un identifiant (ID) de service public dans le réseau d'anonymisation et, après une prise de contact, la communication est poursuivie par le biais d'un ID de service privé.

3. Procédé selon la revendication précédente, **caractérisé en ce que** les ID de service pour chaque partenaire de communication d'un participant sont mémorisés avec un alias local dans un dispositif de stockage sécurisé du terminal mobile.

4. Procédé selon la revendication précédente, **caractérisé en ce qu'**une actualisation de l'état en ligne a lieu après l'inscription.

5. Procédé selon la revendication précédente, **caractérisé en ce que** seuls des sous-groupes aléatoires d'hôtes sont déterminés dans une table
ou les tables sont mises en antémémoire,
ou il est formé un certain nombre de premiers hôtes d'entrée dignes de confiance qui mettent en antémémoire les tables,
ou une mise à jour pour des utilisateurs a lieu selon une priorité qui est d'autant plus élevée qu'il y a eu dans le passé de nombreuses communications avec ceux-ci.

6. Procédé selon une ou plusieurs revendications précédentes, **caractérisé en ce qu'**il met en oeuvre un hôte intermédiaire qui prend la fonction d'un répondeur automatique pour des messages vocaux et des messages textuels et **en ce que**, de préférence, un ID de « service caché » est déposé dans l'hôte intermédiaire, **en ce que** l'hôte intermédiaire vérifie si ces ID sont en ligne, et si des ID passent hors ligne, l'hôte intermédiaire enregistre lui-même les ID dans le nuage TOR et relie les ID correspondants des partenaires de communication et reçoit tous leurs messages de préférence avec la réponse « messages stockés par l'hôte intermédiaire » et **en ce que**, lorsque le terminal mobile passe en ligne, il se relie lui-même d'abord avec son hôte intermédiaire, reçoit les messages enregistrés et fait en sorte que l'hôte intermédiaire, se désinscrive avec son ID du réseau, le terminal mobile inscrit ensuite les ID avec son appareil et envoie ensuite de préférence un message « d'accusé réception » pour tous les messages qu'il a obtenus de l'hôte intermédiaire.

7. Procédé selon une ou plusieurs revendications précédentes, **caractérisé en ce que** le trafic est voilé du fait que la communication vocale apparaît comme une liaison https:// usuelle.

8. Terminal mobile pour anonymiser une communication vocale, comportant :
- des moyens qui exécutent une communication vocale,
- des moyens pour inscrire le terminal mobile dans un réseau d'anonymisation par le biais d'un noeud d'accès ;
- des moyens pour préparer une identité dans le réseau d'anonymisation ;
- des moyens de communication destinés à la communication vocale par le biais du réseau d'anonymisation,
**caractérisé en ce que** le réseau choisit pour la communication différentes chemins aléatoires dans le réseau de sorte à empêcher un traçage rétroactif et **en ce que** les communications sont chiffrées, **en ce que** sont présents des moyens qui exécutent la communication vocale à chaque fois par le biais de deux lignes virtuelles, une pour chaque direction, qui sont chiffrées indépendamment l'une de l'autre et sont acheminées différemment.

9. Terminal mobile selon la revendication précédente, **caractérisé en ce que** sont présents des moyens de sorte que le terminal mobile puisse être atteint par le biais d'un ID de service public dans le réseau d'anonymisation et que, après une prise de contact, la communication soit poursuivie par le biais d'un ID de service privé.

10. Terminal mobile selon la revendication de terminal précédente, **caractérisé en ce qu'**un dispositif de stockage sécurisé est présent et **en ce que** les ID de service pour chaque partenaire de communication d'un participant sont enregistrés avec un alias local dans un dispositif de stockage sécurisé.

11. Terminal mobile selon la revendication de terminal précédente, **caractérisé en ce que**, après l'inscription, une actualisation de l'état en ligne a lieu dans le dispositif de stockage sécurisé.

12. Terminal mobile selon la revendication de terminal précédente,
**caractérisé en ce que** seuls des sous-groupes aléatoires d'hôtes sont déterminés dans une table ou **en ce qu'**une banque de données avec les participants est mise en antémémoire ;
ou **en ce qu'**il est formé un certain nombre de premiers hôtes d'entrée dignes de confiance qui mettent les tables en antémémoire et celles-ci sont récupérées par le terminal mobile,
ou **en ce qu'**une mise à jour a lieu pour des utilisateurs selon une priorité qui d'autant plus élevée qu'il y a eu dans le passé de nombreuses communications avec ceux-ci.

13. Terminal mobile selon la revendication précédente, **caractérisé en ce que** le réseau d'anonymisation est un réseau TOR.
